# EUROPÄISCHE PATENTANMELDUNG

(11) **EP 1 003 305 A2**
(43) Veröffentlichungstag der Anmeldung: **24.05.2000**
(21) Anmeldenummer: 99203222.7
(22) Anmeldetag: 01.10.1999
(51) Int. Cl.: H04L 12/40, B60R 16/02

(54) **Anordnung zur Steuerung vorgegebener Funktionen über einen Datenbus**

(30) Priorität: 08.10.1998 DE 19846350
(71) Anmelder: Philips Corporate Intellectual Property GmbH, 52064 Aachen (DE); Koninklijke Philips Electronics N.V., 5621 BA Eindhoven (NL)
(72) Erfinder: Bühring, Peter, 52064 Aachen (DE)
(74) Vertreter: von Laue, Hanns-Ulrich

(57) **Zusammenfassung**

Bei einer Anordnung zur Steuerung wenigstens einer vorgegebenen Funktion, welche von wenigstens von einem Sendegerät (1) über einen seriellen Datenbus (7) zu einem Empfangsgerät (11) übertragbar ist, ist zur Sichererung gegen unbeabsichtigte Auslösung der vorgegebenen Funktion vorgesehen, daß das Sendegerät (1) zur Steuerung einer vorgegebenen Funktion ein zugeordnete, vorgegebene Datenmeldung auf den sereiellen Datenbus (7) gibt und einen Übertragungsparameter des Datenbusses auf einen vorgebenen Wert einstellt
und daß das Empfangsgerät (11) die vorgegebene Funktion nur dann auslöst, wenn auf dem Datenbus (7) die vorgegebene Datenmeldung mir dem vorgegebenen Übertragungsparameter erscheint.

## Beschreibung

Die Erfindung betrifft eine Anordnung zur Steuerung wenigstens einer vorgegebenen Funktion, welche von wenigstens von einem Sendegerät über einen seriellen Datenbus zu wenigstens einem Empfangsgerät übertragbar ist.

Bei derartigen Anordnungen besteht bei der Übertragung vorgegebener Funktionen über einen Datenbus vielfach der Wunsch, diese mit großer Sicherheit nur dann auszulösen, wenn tatsächlich die entsprechende Meldung über den Datenbus erfolgt ist. Um dies zu erreichen, wird bei DE-OS 196 16 293 eine Trennung zwischen normalen Nachrichten, die mir geringer Amplitude gesendet werden, und kritischen, sicherheitsrelevanten Nachrichten, die mit großer Amplitude gesendet werden, gewählt. Jedoch wird dort auf Empfängerseite durch Empfang der kritischen Nachricht mir der hohen Amplitude unmittelbar die kritische Funktion ausgelöst. Somit ist zwar eine Trennung zwischen unkritischen und kritischen Nachrichten erreicht worden, es gibt jedoch keine zusätzliche Sicherung gegen unbeabsichtige Auslösung der kritischen Funktion auf der Empfängerseite, beispielsweise wegen Funktionsfehlern im Empfänger.

Es ist Aufgabe der Erfindung, die eingangs genannte Anordnung dahingehend weiter zu entwickeln, daß im Empfänger eine verbesserte Sicherheit gegen unbeabsichtigte Auslösung der vorgegebenen Funktion erzielt wird, die auch bei Übertragungsfehlern oder Funktionsfehlern im Empfänger wirksam ist.

Diese Aufgabe wird erfindungsgemäß dadurch gelöst, daß das Sendegerät zur Steuerung einer vorgegebenen Funktion ein zugeordnete, vorgegebene Datenmeldung auf den seriellen Datenbus gibt und einen Übertragungsparameter des Datenbusses auf einen vorgegebenen Wert einstellt
und daß das Empfangsgerät die vorgegebene Funktion nur dann auslöst, wenn auf dem Datenbus die vorgegebene Datenmeldung mit dem vorgegebenen Übertragungsparameter erscheint.

Soll durch den Sender eine sicherheitskritische, vorgegebene Nachricht ausgelöst werden, so gibt der Sender also einerseits eine entsprechende vorgegebene Datenmeldung auf den seriellen Datenbus. Zur Erzielung einer zusätzlichen Sicherheit sowohl bei der Übertragung wie auch beim Empfang stellt der Sender zusätzlich auf dem Datenbus einen vorgegebenen Übertragungsparameter des Datenbusses auf einen vorgegebenen Wert ein. Dabei kann es sich beispielsweise um die Geschwindigkeit der Nachrichtenübertragung, um die Signalamplitude, die Höhe des Offsets oder Ähnliches handeln.

In dem Empfangsgerät wird die vorgegebene Funktion nur dann ausgelöst, wenn sowohl auf dem Datenbus die vorgegebene Datenmeldung erscheint, wie auch wenn diese Datenmeldung mir dem vorgegebenen Übertragungsparameter übertragen wird. Es müssen also beide Bedingungen gleichzeitig erfüllt sein; nur dann wird die vorgegebene sicherheitskritische Funktion ausgelöst. Damit ist eine erhöhte Sicherheit gegen unbeabsichtiges Auslösen der vorgegebenen Funktion erzielt, da beide Bedingungen erfüllt sein müssen. Auch beispielsweise bei einer fehlerhaften Erkennung einer Datenmeldung als vorgegebene Datenmeldung wird die vorgegebene Funktion noch nicht ausgelöst. Auch kann ein versehentliches Auslösen der vorgegebenen Funktion durch Versagen einer Baugruppe, beispielsweise auch im Empfänger, noch nicht auftreten.

Bei einer Ausgestaltung der Erfindung gemäß Anspruch 2 sind zwei Sensoren vorgesehen, die unabhängig voneinander Auslösesignale erzeugen, welche wiederum unabhängig voneinander die vorgegebene Datenmeldung auslösen bzw. die Einstellung des vorgegebenen Übertragungsparameters des Datenbusses auf den vorgegebenen Wert auslösen. Damit ist auch sendeseitig eine zusätzliche Redundanz erzielt. Eine derartige Anordnung kann beispielsweise vorteilhaft zur Auslösung von Airbags in Fahrzeugen eingesetzt werden.

Weitere Ausgestaltungen der Erfindung gemäß Ansprüchen 3 und 4 gestatten eine einfache Einstellung und Messung des vorgegebenen Übertragungsparameters des seriellen Datenbusses. Eine Anordnung zur Einstellung und Messung einer Übertragungsgeschwindigkeit auf einem seriellen Datenbus an sich ist beispielsweise aus DE-OS 197 04 884 bekannt. Diese kann für die erfindungsgemäße Anordnung vorteilhaft eingesetzt werden.

Eine weitere vorteilhafte Möglichkeit der Einstellung des Übertragungsparameters ist in Anspruch 6 als weitere Ausgestaltung der Erfindung angegeben. Dort wird die Redundanz durch die Einstellung des Übertragungsparameters des seriellen Datenbusses durch Wahl verschiedener Polarität der Impulse auf dem Datenbus erzielt.

Die Ansprüche 8 und 9 geben in weiteren Ausgestaltungen an, wie die Anordnung vorteilhaft weiter ausgestaltet werden kann, um bei einem einfachen Aufbau dennoch die oben erläuterte Sicherheit gegen unbeabsichtigtes Auslösen der vorgegebenen Funktion erzielen zu können.

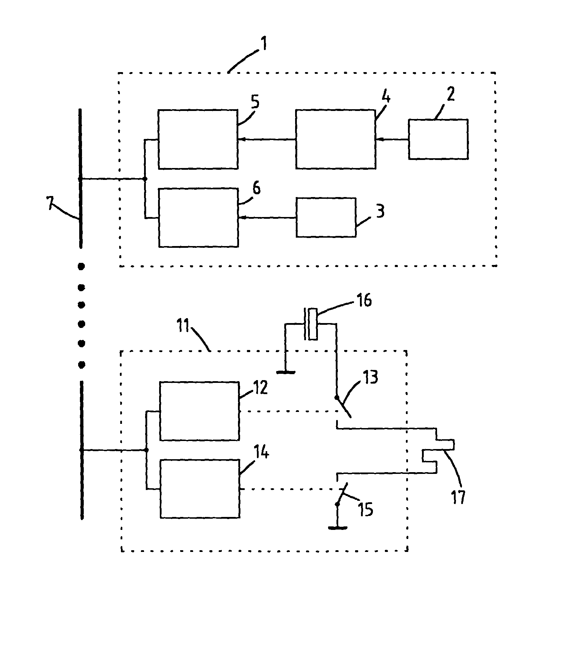

Nachfolgend wird ein Ausführungsbeispiel der Erfindung anhand der Zeichnung erläutert.

In der Zeichnung ist als Ausführungsbeispiel ein Blockschaltbild einer erfindungsgemäßen Anordnung dargestellt, welche dazu dient, in einem Fahrzeug Zündpillen von Airbags auszulösen bzw. deren Auslösung über einen seriellen Datenbus zu steuern.

Die einzige Figur der Zeichnung zeigt ein Sendegerät 1, in welchem ein erster Crashsensor 2 und ein zweiter Crashsensor 3 vorgesehen sind. Diese Sensoren dienen dazu, Verzögerungswerte eines Fahrzeugs, in das das Sendegerät in in der Figur nicht näher dargesteller Weise eingebaut ist, festzustellen. Überschreiten diese Verzögerungswerte bestimmte Werte bzw. erreicht die Verzögerung eine bestimmte Charakteristik, wird dies durc die Sensoren 2 und 3 festgestellt. Es erzeugen dann beide Sensoren 2 und 3 entsprechende Auslösesignale.

Das Auslösesignal des ersten Sensors 2 wird an einen Mikroprozessor 4 weitergegeben, der das Signal auswerter und an einen Transmitter 5 weitergibt. Der Transmitter 5 gibt eine entsprechende Datenmeldung auf einen seriellen Datenbus 7.

Das Auslösesignal des zweiten Sensors 3 gelangt an eine Anordnung zur Steuerung der Datenbusgeschwindigkeit 6. Diese Anordnung 6 ist in der Lage, die Geschwindigkeit, mit der Daten auf dem seriellen Datenbus 7 übertragen werden, einzustellen. Sie ist dabei wenigstens in der Lage, zwei verschiedene Geschwindigkeiten einzustellen. Vorteilhaft ist die Anordnung 6 zur Steuerung der Datenbusgeschwindigkeit dabei so ausgelegt, daß normale Datenmeldungen, die nicht zu den vorgegebenen, sicherheitskritischen Datenmeldungen gehören, mit geringerer Geschwindigkeit auf dem Datenbus 7 übertragen werden.

Die Anordnung 6 zur Steuerung der Datenbusübertragungsgeschwindigkeit erhöht jedoch die Datengeschwindigkeit auf dem seriellen Datenbus 7 auf einen höheren Wert, wenn sie ein Auslösesignal des zweiten Sensors 3 erhält. Es wird dann normalerweise durch den Sensor 2 eine vorgegebene Datenmeldung zur Auslösung der vorgegebenen Funktion auf dem seriellen Datenbus 7 übertragen. Erhält die Anordnung 6 also vom zweiten Sensor 3 ein Auslösesignal erhöht sie die Datenbusübertragungsgeschwindigkeit auf dem Datenbus 7 und beschleunigt damit die dort gerade übertragene vorgegebene Datenmeldung zur Auslösung der vorgegebenen sicherheitskritischen Funktion.

Es wird damit im Ergebnis erreicht, daß normale Datenmeldungen auf dem seriellen Datenbus 7 mit der geringeren Datengeschwindigkeit übertragen werden. Werden jedoch beide Sensoren 2 und 3 ausgelöst, so wird einerseits eine vorgegebene Datenmeldung zur Auslösung der vorgegebenen sicherheitskritischen Funktion auf dem Datenbus 7 übertragen. Gleichzeitig wird durch die Anordnung 6 die Übertragungsgeschwindigkeit auf dem seriellen Datenbus 7 auf den höheren Wert eingestellt.

Damit ist insofern eine Redundanz erzielt worden, als die vorgegebene sicherheitskritische Funktion auf dem seriellen Datenbus nicht nur durch die entsprechende vorgegebene Datenmeldung, sondern auch durch die höhere Übertragungsgeschwindigkeit gekennzeichnet ist. Nur wenn beide Ereignisse gleichzeitig auftreten, soll eine Auslösung der vorgegebenen sicherheitskritischen Funktion erfolgen.

Dieses wird in einem in der Figur angedeuteten Empfangsgerät 11 dadurch erreicht, daß dieses einerseits ein Datenempfangsgerät 12 aufweist, welches die auf dem seriellen Datenbus 7 auftretenden Datenmeldungen auswerter und andererseits eine Anordnung 14 zur Messung der Datenbusübertragungsgeschwindigkeit aufweist, welche laufend die auf dem Datenbus 7 vorhandene Übertragungsgeschwindigkeit mißt.
Nur wenn gleichzeitig das Datenempfangsgerät 12 die vorgegebene Datenmeldung auf dem Datenbus 7 vorfindet und die Anordnung 14 feststellt, daß auf dein Datenbus 7 eine Datenübertragung mit der höheren Datengeschwindigkeit stattfindet, soll die vorgegebene sicherheitskritische Funktion ausgelöst werden.

Dies wird in dem Ausführungsbeispiel gemäß der Figur dadurch erreicht, daß das Empfangsgerät 12 bei Vorfinden der vorgegebenen Datenmeldung auf dem Datenbus 7 einen Schalter 13 schließt und die Anordnung 14 bei Vorfinden der höheren Übertragungsgeschwindigkeit auf dem seriellen Datenbus 7 einen Schalter 15 schließt.

Nur wenn beide Schalter 13 und 15 geschlossen werden wird eine Energiequelle 16 einerseits und ein Bezugspotential der Anordnung andererseits auf eine in der Figur schematisch angedeutete Zündpille 17 eines Airbags gegeben., Es wird also der Airbag mittels der Zündpille 17 nur dann ausgelöst, wenn beide Schalter 13 und 15 gleichzeitig geschlossen sind.

Dieser Fall kann jedoch nur dann eintreten, wenn sowohl der Datenempfänger 12 wie auch die Anordnung 14 jeweils die Bedingungen vorgefunden haben, die einer Auslösung der vorgegebenen sicherheitsrelevanten Funktion entsprechen, also einerseits die vorgegebene Datenmeldung auf dem Datenbus und andererseits die höhere Übertragungsgeschwindigkeit auf dem seriellen Datenbus 7.

Beispielsweise durch einen Übertragungsfehler, einen Fehler im Sendegerät 1 oder einen Fehler im Sendegerät 11 wird jeweils nur eine der beiden Bedingungen erfüllt und daher nur einer der Schalter 13 oder 15 geschlossen, so daß die ungewollte Auslösung der Zündpille 17 verhindert wird.

Im Ergebnis ist also tatsächlich eine vollständige Redundanz bei der gesamten Übertragung auf dem Datenbus 7 erzielt worden. Es müssen beide Bedingungen zur Auslösung der vorgegebenen Funktion gleichzeitig erfüllt sein. Damit ist ein Schurz gegen unbeabsichtigtes Auslösen der vorgegebenen Funktion erzielt worden. Der Schurz erstreckt sich dabei sowohl auf Fehler im Sender 1 wie auch im Empfänger 11. Auch Übertragungsfehler auf den Datenbus 7 können die vorgegebene sicherheitskritische Funktion noch nicht auslösen, da diese Fehler normalerweise nicht zur gleichzeitigen Erfüllung beider Bedingungen zur Auslösung der vorgegebenen Funktion führen werden.

Die erfindungsgemäße Anordnung ist selbstverständlich nicht nur zum Zwecke der Auslösung von Airbags in Fahrzeugen geeignet; sie kann vielmehr immer dann eingesetzt werden, wenn Funktionen übertragen werden sollen, die gegen unbeabsichtigte Auslösung geschützt sein sollen. Es sind dann anstelle der Sensoren 2 bzw. 3 und der Zündpille 17 andere schaltungstechnische Elemente vorzusehen, die entsprechend der auszulösenden Funktion zu wählen sind.

## Patentansprüche

1. Anordnung zur Steuerung wenigstens einer vorgegebenen Funktion, welche von wenigstens von einem Sendegerät (1) über einen seriellen Datenbus (7) zu wenigstens einem Empfangsgerät (11) übertragbar ist, dadurch gekennzeichnet,
daß das Sendegerät (1) zur Steuerung einer vorgegebenen Funktion ein zugeordnete, vorgegebene Datenmeldung auf den seriellen Datenbus (7) gibt und einen Übertragungsparameter des Datenbusses auf einen vorgegebenen Wert einstellt
und daß das Empfangsgerät (11) die vorgegebene Funktion nur dann auslöst, wenn auf dem Datenbus (7) die vorgegebene Datenmeldung mit dem vorgegebenen Übertragungsparameter erscheint.

2. Anordnung nach Anspruch 1, dadurch gekennzeichnet,
daß zwei Sensoren (2,3) zur Auslösung einer vorgegebenen Funktion vorgesehen sind,
daß die Sensoren (2,3) zur Steuerung der vorgegebenen Funktion unter vorgegebenen Bedingungen Auslösesignale erzeugen,
daß ein Auslösesignal eines ersten (2) der Sensoren (2,3) als vorgegebene Datenmeldung auf den seriellen Datenbus (7) gegeben wird,
daß ein Auslösesignal eines zweiten (3) der Sensoren (2,3) einen vorgegebenen Übertragungsparameter des Datenbusses (7) auf einen vorgegebenen Wert einstellt.

3. Anordnung nach Anspruch 1 oder 2, dadurch gekennzeichnet,
daß als vorgegebener Übertragungsparameter eine vorgegebene Übertragungsgeschwindigkeit auf dem Datenbus (7) vorgesehen ist.

4. Anordnung nach Anspruch 3, dadurch gekennzeichnet,
daß die vorgegebene Übertragungsgeschwindigkeit auf dem Datenbus (7) ausschließlich dann eingestellt wird, wenn ein Auslösesignal des zweiten Sensors (3) vorliegt.

5. Anordnung nach Anspruch 1, dadurch gekennzeichnet,
daß als vorgegebener Übertragungsparameter eine festgelegte Signalamplitude auf dem Datenbus (7) vorgesehen ist.

6. Anordnung nach Anspruch 1, dadurch gekennzeichnet,
daß über den Datenbus (7) eine bipolare Wechselspannung übertragen wird, daß die Impulse der einen Polarität der Wechselspannung zur Energieübertragung verwendet und zur Auslösung einer vorgegebenen Funktion auf einen vorgegebenen Wert eingestellt werden und daß die Impulse der anderen Polarität zur Datenübertragung verwendet und zur Auslösung einer vorgegebenen Funktion die zugeordnete, vorgegebene Datenmeldung beinhalten.

7. Anordnung nach Anspruch 2, dadurch gekennzeichnet,
daß es sich bei den Sensoren (2,3) um Crashsensoren eine Fahrzeugs handelt und daß als vorgegebene Funktion eine Auslösung von Zündpillen (17) von Airbags eines Fahrzeugs vorgesehen ist.

8. Anordnung nach Anspruch 2, dadurch gekennzeichnet,
daß in der Anordnung ein Sendegerät (1) vorgesehen ist, an das die Sensoren (2,3) gegebenenfalls die Auslösesignale senden und welches einen Transmitter (5), der ein Auslösesignal des ersten Sensors (2) in die vorgegebene Datenmeldung umsetzt, und eine Anordnung (6) zur Steuerung der Datenbus-Übertragungsgeschwindigkeit aufweist, welche bei Auftreten eines Auslösesignals des zweiten Sensors (3) die Übertragungsgeschwindigkeit des Datenbusses auf einen vorgegebenen Wert einstellt.

9. Anordnung nach Anspruch 2, dadurch gekennzeichnet,
daß in der Anordnung ein Empfangsgerät (11) vorgesehen ist, welches den Datenbus (7) auswertet und welches nur dann die vorgegebene Funktion auslöst, wenn ein in dem Empfangsgerät (11) vorgesehener Datenempfänger (12) die vorgegebene Datenmeldung vom Datenbus (7) empfängt und wenn gleichzeitig eine in dem Empfänger (11) vorgesehene Anordnung (14) zur Messung der Datenbus-Übertragungsgeschwindigkeit eine vorgegebene Übertragungsgeschwindigkeit auf dem Datenbus (7) feststellt.

10. Fahrzeug mit einer Anordnung nach einem der Ansprüche 1 bis 9.
